# EUROPEAN PATENT SPECIFICATION

(11) **EP 4 434 780 B1**
(45) Date of publication and mention of the grant of the patent: **04.03.2026**
(21) Application number: 23162905.6
(22) Date of filing: 20.03.2023
(51) Int. Cl.: B60H 1/00, B60K 35/00, B60H 1/34, B60K 37/00

(54) **DASHBOARD ASSEMBLY FOR A VEHICLE, VENTILATION MODULE, DASHBOARD BODY, SIDE COVER PART, CENTRAL COVER PART, AND METHOD FOR ASSEMBLING A DASHBOARD ASSEMBLY FOR A VEHICLE**
ARMATURENBRETTANORDNUNG FÜR EIN FAHRZEUG, BELÜFTUNGSMODUL, ARMATURENBRETTKÖRPER, SEITENVERKLEIDUNGSTEIL, ZENTRALES DECKELTEIL UND VERFAHREN ZUR MONTAGE EINER ARMATURENBRETTANORDNUNG FÜR EIN FAHRZEUG
ENSEMBLE PLANCHE DE BORD POUR VÉHICULE, MODULE DE VENTILATION, CORPS DE PLANCHE DE BORD, PARTIE DE COUVERCLE LATÉRAL, PARTIE DE COUVERCLE CENTRAL ET PROCÉDÉ D'ASSEMBLAGE D'UN ENSEMBLE PLANCHE DE BORD POUR VÉHICULE

(43) Date of publication of application: 25.09.2024
(73) Proprietor: Volvo Car Corporation, 405 31 Göteborg (SE)
(72) Inventor: ANDERSSON, Johan, 40531 Göteborg (SE); MÜLLER, Patrik, 40531 Göteborg (SE); ALLIOT, Clément, 40531 Göteborg (SE); LIAO, Zhuohang, 40531 Göteborg (SE)
(74) Representative: Maiwald GmbH

(56) References cited:
- CN-A- 112 060 907
- KR-B1- 102 436 283
- US-A1- 2016 039 270
- US-A1- 2019 047 377

## Description

The present disclosure relates to a dashboard assembly for a vehicle. The dashboard assembly comprises a dashboard body extending at least along a width direction, wherein in a state in which the dashboard body is mounted in the vehicle, the width direction extends in parallel to a width direction of the vehicle.

Furthermore, the present disclosure relates to a ventilation module for such a dashboard assembly, to a side cover part for such a dashboard assembly, and to a central cover part for such a dashboard assembly.

Additionally, the present disclosure is directed to a method for assembling a dashboard assembly for a vehicle.

Dashboard assemblies comprising a dashboard body, one or more ventilation modules and one or more cover parts are known.

US 2016/039270 A1 discloses a register fixing structure for a vehicle comprising a register, a first engaging portion, a first engaged portion, a second engaging portion and a second engaged portion.

KR 102 436 283 B1 shows an air vent for a vehicle. The wind vane can be opened and closed automatically.

US 2019/047377 A1 discloses an air conditioning blower hole apparatus which is capable of suppressing a looseness of a fin.

It is an objective of the present disclosure to simplify known dashboard assemblies. In this context, known dashboard assemblies shall be simplified from a structural perspective and from the perspective of assembly. This means that a dashboard assembly shall be provided which is structurally simple and which can be assembled in a simple manner.

The problem is at least partially solved or alleviated by the subject matter of the independent claims of the present invention, wherein further examples are incorporated in the dependent claims.

According to a first aspect, there is provided a dashboard assembly for a vehicle. The dashboard assembly comprises a dashboard body extending at least along a width direction. In a state in which the dashboard body is mounted in the vehicle, the width direction extends in parallel to a width direction of the vehicle. The dashboard assembly also comprises at least one ventilation module. The ventilation module comprises an air duct ending in an air outlet being configured to discharge air into a passenger compartment of the vehicle. At least one body-sided mounting surface with a body-sided connection feature is arranged on the dashboard body. The body-sided mounting surface faces into the width direction. The at least one ventilation module abuts against the body-sided mounting surface and is connected to the dashboard body using the body-sided connection feature. In this context, the width direction is the direction of the biggest extension of the dashboard body and the dashboard assembly. It is understood that the dashboard body also extends along a height direction and along a depth direction. In a state in which the dashboard body is mounted in the vehicle, a height direction of the dashboard body corresponds to a height direction of the vehicle. Moreover, in the state in which the dashboard body is mounted in the vehicle, the depth direction of the dashboard body extends along a longitudinal direction of the vehicle. The fact that the body-sided mounting surface faces into the width direction means that the biggest component of a normal on the mounting surface extends into the width direction. It is noted that the body-sided mounting surface may comprise a plurality of surface segments. In this case, a normal on a midplane of the plurality of surface segments is used in order to assess whether the body-sided mounting surface faces into the width direction. Thus, in a state in which the dashboard assembly is mounted in the vehicle, the at least one ventilation module abuts against the body-sided mounting surface face along the width direction. An alternative term for a ventilation module is ventilation cassette. Abutting the at least one ventilation module against the body-sided mounting surface and connecting the at least one ventilation module to the body-sided connection feature is structurally simple. Comparatively few parts are necessary. Moreover, abutting the at least one ventilation module against the body-sided mounting surface along a width direction renders the assembly of the dashboard assembly simple.

In the present disclosure, the term body-sided refers to a feature or element of the dashboard body.

According to a first alternative of the present disclosure, the dashboard assembly further comprises a side cover part being arranged at an end of the dashboard body when regarding the width direction. At least one side cover-sided mounting surface with a side cover-sided connection feature is arranged on the side cover part. The side cover-sided mounting surface faces into the width direction. The at least one ventilation module abuts against the side cover-sided mounting surface and is connected to the side cover part using the side cover-sided connection feature. As before, the fact that the side cover-sided mounting surface faces into the width direction means that the biggest component of a normal on the mounting surface extends into the width direction. It is noted that the side cover-sided mounting surface may comprise a plurality of surface segments. In this case, a normal on a midplane of the plurality of surface segments is used in order to assess whether the side cover-sided mounting surface faces into the width direction. Consequently, the ventilation module is sandwiched between a portion of the dashboard body and a portion of the side cover part. It is emphasized that the side cover part and the dashboard body are separate parts. Optionally, a portion of the side cover part is connected to the dashboard body in a direct manner, i.e. not via the ventilation module. Thus, when assembling the dashboard assembly, not only the ventilation module can be abutted against the dashboard body along the width direction, but also the side cover part can be abutted against the ventilation module along a width direction. It is noted that of course, different assembly orders are possible. For example, the side cover part may first be connected to the ventilation module and then the sub-assembly of the ventilation module and the side cover part may be connected to the dashboard body. In all variants, assembling the dashboard assembly is simple.

In the present disclosure, the term side cover-sided refers to a feature or element of the side cover part.

According to a second alternative of the present disclosure, the dashboard assembly further comprises a central cover part being arranged between the ends of the dashboard body when regarding the width direction. At least one central cover-sided mounting surface with a central cover-sided connection feature is arranged on the central cover part. The central cover-sided mounting surface faces into the width direction. The at least one ventilation module abuts against the central cover-sided mounting surface and is connected to the central cover part using the central cover-sided connection feature. As explained previously, the fact that the central cover-sided mounting surface faces into the width direction means that the biggest component of a normal on the mounting surface extends into the width direction. It is noted that the central cover-sided mounting surface may comprise a plurality of surface segments. In this case, a normal on a midplane of the plurality of surface segments is used in order to assess whether the central cover-sided mounting surface faces into the width direction. Consequently, the ventilation module is sandwiched between a portion of the dashboard body and a portion of the central cover part. It is understood that the central cover part may be arranged at any position of the dashboard body between the ends of the dashboard body along the width direction. It is not necessary that the central cover part is arranged in a geometric middle of the dashboard body. It is emphasized that the central cover part and the dashboard body are separate parts. Optionally, a portion of the central cover part is connected to the dashboard body in a direct manner, i.e. not via the ventilation module. Thus, when assembling the dashboard assembly, not only the ventilation module can be abutted against the dashboard body along the width direction, but also the central cover part can be abutted against the ventilation module along a width direction. It is noted that of course, different assembly orders are possible. For example, the central cover part may first be connected to the ventilation module and then the sub-assembly of the ventilation module and the central cover part may be connected to the dashboard body. In all variants, assembling the dashboard assembly is simple.

In the present disclosure, the term central cover-sided refers to a feature or element of the central cover part.

It is noted that the first alternative of the present disclosure and the second alternative of the present disclosure may be combined.

In an example, the body-sided mounting surface comprises a body-sided positioning feature. The ventilation module engages the body-sided positioning feature. The positioning feature has the effect that the ventilation module may be abutted against the body-sided mounting surface in one single well-defined position only. The well-defined position comprises a translatory position and a rotatory position of the ventilation module with respect to the dashboard body. This facilitates the assembly of the dashboard assembly. Moreover, since the positioning feature is provided on the body-sided mounting surface, very few parts are necessary.

According to an example, the dashboard body comprises a bezel portion being located adjacent to the ventilation module. In this context, a bezel portion is to be understood as a portion of the dashboard body at least partially delimiting the ventilation module, especially the air outlet. Consequently, in a dashboard assembly according to the present disclosure, the air outlet has an optical appearance which is similar to known air outlets. Thus, for a user of the dashboard assembly or a vehicle in which the dashboard assembly is installed, the optical appearance is familiar and pleasant. However, especially in contrast to known dashboard assemblies, the bezel portion is formed as an integral portion of the dashboard body. This means that the bezel portion is not formed as a separate part. This renders the dashboard assembly structurally simple and facilitates its assembly.

In an example, the side cover-sided mounting surface comprises a side cover-sided positioning feature. The ventilation module engages the side cover-sided positioning feature. The side cover-sided positioning feature has the effect that the ventilation module may be abutted against the side cover-sided mounting surface in one single well-defined position only. The well-defined position comprises a translatory position and a rotatory position of the ventilation module with respect to the side cover part. This facilitates the assembly of the dashboard assembly. Moreover, since the positioning feature is provided on the side cover-sided mounting surface, very few parts are necessary.

In an example, the side cover part comprises a bezel portion being located adjacent to the ventilation module. As before, a bezel portion is to be understood as a portion of the side cover part at least partially delimiting the ventilation module, especially the air outlet. Consequently, in a dashboard assembly according to the present disclosure, the air outlet has an optical appearance which is similar to known air outlets. Thus, for a user of the dashboard assembly or a vehicle in which the dashboard assembly is installed, the optical appearance is familiar and pleasant. However, especially in contrast to known dashboard assemblies, the bezel portion is formed as an integral portion of the side cover part. This means that the bezel portion is not formed as a separate part. This renders the dashboard assembly structurally simple and facilitates its assembly.

In an example, the central cover-sided mounting surface comprises a central cover-sided positioning feature. The ventilation module engages the central cover-sided positioning feature. The central cover-sided positioning feature has the effect that the ventilation module may be abutted against the central cover-sided mounting surface in one single well-defined position only. The well-defined position comprises a translatory position and a rotatory position of the ventilation module with respect to the central cover part. This facilitates the assembly of the dashboard assembly. Moreover, since the positioning feature is provided on the central cover-sided mounting surface, very few parts are necessary.

In an example, the central cover part comprises a bezel portion being located adjacent to the ventilation module. As before, a bezel portion is to be understood as a portion of the central cover part at least partially delimiting the ventilation module, especially the air outlet. Consequently, in a dashboard assembly according to the present disclosure, the air outlet has an optical appearance which is similar to known air outlets. Thus, for a user of the dashboard assembly or a vehicle in which the dashboard assembly is installed, the optical appearance is familiar and pleasant. However, especially in contrast to known dashboard assemblies, the bezel portion is formed as an integral portion of the central cover part. This means that the bezel portion is not formed as a separate part. This renders the dashboard assembly structurally simple and facilitates its assembly.

According to a second aspect, there is provided a ventilation module for a dashboard assembly of the present disclosure. The ventilation module comprises an air duct ending in an air outlet being configured to discharge air into a passenger compartment of the vehicle. Moreover, the ventilation module comprises at least one counter-mounting surface with a counter-connection feature. The counter-mounting surface is configured to abut against a mounting surface of a dashboard body, of a side cover part or of a central cover part and the counter-connection feature is configured to engage a connection feature of the mounting surface of the dashboard body, of the side cover part or of the central cover part. Such a ventilation module is structurally simple. This renders the structure of a dashboard assembly in which the ventilation module is used also simple. Moreover, as has already been explained before, using such a ventilation module facilitates the assembly of a dashboard assembly in which it is used.

According to an example, the at least one ventilation module comprises one or more lamellae which are configured for guiding an airstream being oriented towards the air outlet. The lamellae may also be called guiding blades. The lamellae or blades may be used in order to direct an airstream into different directions. For example, one partial airstream may be directed towards a window of the vehicle and another partial airstream may be directed towards a passenger position. The partial airstream being directed towards the window may be used for defrosting the window. Alternatively or additionally, the lamellae or blades may be adjustable. Thus, when installed in a vehicle, a user of the vehicle may adjust an airstream leaving the air outlet according to his or her preferences.

According to a further example, the ventilation module may comprise two or more air outlets. Each of these air outlets may be configured to direct an airstream into a different direction. For example, one partial airstream may be directed towards a window of the vehicle and another partial airstream may be directed towards a passenger position. The partial airstream being directed towards the window may be used for defrosting the window.

In an example, the ventilation module comprises two counter-mounting surfaces, each having a counter-connection feature, the counter-mounting surfaces being arranged on opposite sides of the ventilation module. Consequently, the ventilation module may be sandwiched between a dashboard body and a side cover part or between the dashboard body and a central cover part. In both alternatives, the ventilation module may be reliably connected to the respective other parts. Consequently, the ventilation module may be mounted within the dashboard assembly in a mechanically stable manner.

According to a third aspect, not forming part of the present disclosure, there is provided a dashboard body for a dashboard assembly of the present disclosure. The dashboard body extends at least along a width direction, wherein in a state in which the dashboard body is mounted in a vehicle, the width direction extends in parallel to a width direction of the vehicle. At least one body-sided mounting surface with a body-sided connection feature is arranged on the dashboard body. The body-sided mounting surface faces into the width direction. Such a dashboard body is structurally simple. This renders the structure of a dashboard assembly in which the dashboard body is used also simple. Moreover, as has already been explained before, using such a dashboard body facilitates the assembly of a dashboard assembly in which it is used.

According to a fourth aspect, there is provided a side cover part for a dashboard assembly of the present disclosure. The side cover part has at least one side cover-sided mounting surface with a side cover-sided connection feature. The side cover-sided mounting surface faces into a width direction when the side cover part is mounted in the dashboard assembly. Such a side cover part is structurally simple. This renders the structure of a dashboard assembly in which the side cover part is used also simple. Moreover, as has already been explained before, using such a side cover part facilitates the assembly of a dashboard assembly in which it is used.

According to a fifth aspect, there is provided a central cover part for a dashboard assembly of the present disclosure. The central cover part has at least one central cover-sided mounting surface with a central cover-sided connection feature. The central cover-sided mounting surface faces into a width direction when the central cover part is mounted in the dashboard assembly. Such a central cover part is structurally simple. This renders the structure of a dashboard assembly in which the central cover part is used also simple. Moreover, as has already been explained before, using such a central cover part facilitates the assembly of a dashboard assembly in which it is used.

In an example, the central cover part comprises a mounting interface for a central infotainment unit. The central infotainment unit may comprise a screen unit. Thus, the central cover part fulfills two functionalities. The first functionality relates to holding the at least one ventilation module and the second functionality relates to mounting the central infotainment unit to the remaining parts of the dashboard assembly. Due to this double functionality, comparatively few parts are necessary.

According to a sixth aspect, there is provided a method for assembling a dashboard assembly for a vehicle. The method comprises:
- abutting a ventilation module against a body-sided mounting surface of a dashboard body or a side cover-sided mounting surface of a side cover part by moving the ventilation module and the dashboard body or side cover part relative to one another along a width direction, and
- connecting the ventilation module to the body-sided mounting surface of the dashboard body or to the side cover-sided mounting surface of the side cover part using a connection feature.

Thus, a mounting direction corresponds to the width direction of the dashboard body. In other words, the ventilation module is stacked on the dashboard body or on the side cover part along the width direction. This is a very simple manner of assembling a dashboard assembly.

According to an example, the method according to the present disclosure is executed in connection with the dashboard assembly of the present disclosure.

In an example, the method further comprises:
- abutting an additional ventilation module against a body-sided mounting surface of a dashboard body or a central cover-sided mounting surface of a central cover part by moving the additional ventilation module and the dashboard body or central cover part relative to one another along a width direction, and
- connecting the additional ventilation module to the body-sided mounting surface of the dashboard body or to the central cover-sided mounting surface of the central cover part using a connection feature.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a dashboard assembly according to the present disclosure in a frontal view, wherein the dashboard assembly comprises a dashboard body according to the present disclosure, a central cover part according to the present disclosure, four ventilation modules according to the present disclosure and two side cover parts according to the present disclosure and wherein the dashboard assembly may be assembled using the method according to the present disclosure,
- Figure 2: shows the dashboard assembly of Figure 1 in a top view along direction II in Figure 1, and
- Figure 3: shows the dashboard assembly of Figures 1 and 2 in an exploded view which corresponds to the top view of Figure 2.

The Figures are merely schematic representations and serve only to illustrate examples of the disclosure. Identical or equivalent elements are in principle provided with the same reference signs.

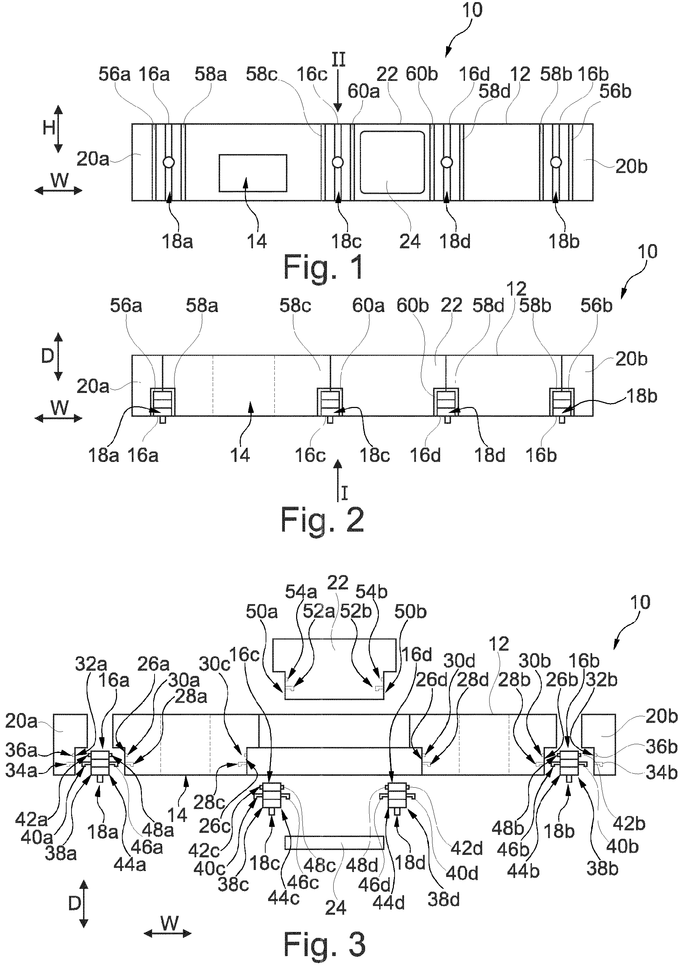

Figure 1 shows a dashboard assembly 10 for a vehicle in a frontal view. This means that the dashboard assembly 10 is shown as seen when looking along a longitudinal direction of a vehicle if the dashboard assembly 10 is installed in the vehicle.

Consequently, a width direction W of the dashboard assembly 10 extends from left to right in the Figure. This width direction W corresponds to a width direction of a vehicle, if the dashboard assembly 10 is mounted therein.

A height direction H of the dashboard assembly 10 extends in a top-down direction of Figure 1.

Figure 2 shows the dashboard assembly 10 along direction II which corresponds to a top view. In other words, in Figure 2 the dashboard assembly 10 is shown as seen when looking vertically downwards along the height direction H. This height direction H corresponds to a height direction of a vehicle if the dashboard assembly 10 is installed in the vehicle.

A depth direction D of the dashboard assembly 10 extends in a top-down direction of Figure 2. If the dashboard assembly 10 is installed in a vehicle, the depth direction D corresponds to a longitudinal direction of the vehicle.

The perspective of Figure 1 is indicated by arrow I in Figure 2.

The dashboard assembly 10 comprises a dashboard body 12 which extends along the width direction W.

A reception channel 14 is provided in the dashboard body 12. The reception channel 14 is configured to receive a steering column (not shown) if the dashboard assembly 10 is installed in a vehicle.

Moreover, the dashboard assembly 10 comprises a total of four ventilation modules 16a, 16b, 16c, 16d.

Each of the ventilation modules 16a, 16b, 16c, 16d comprises an air duct ending in an air outlet 18a, 18b, 18c, 18d being configured to discharge air into a passenger compartment of the vehicle in which the dashboard assembly 10 may be installed.

Furthermore, the dashboard assembly 10 comprises two side cover parts 20a, 20b being arranged at an end of the dashboard body 12 respectively when regarding the width direction W.

Additionally, the dashboard assembly 10 comprises a central cover part 22 being arranged between the ends of the dashboard body 12 when regarding the width direction W.

On the central cover part 22, there is arranged a screen unit 24. The screen unit 24 for example forms part of an infotainment system.

The ventilation module 16a is sandwiched between the side cover part 20a and the dashboard body 12 (see also Figure 3).

To this end, a body-sided mounting surface 26a with a body-sided connection feature 28a and a body-sided positioning feature 30a are arranged on the dashboard body 12. The body-sided mounting surface 26a faces into the width direction W. In the examples of Figures 1 to 3, the body-sided mounting surface 26a faces to the left.

Moreover, on the side cover part 20a, there is provided a side cover-sided mounting surface 32a having a side cover-sided connection feature 34a and a side cover-sided positioning feature 36a. The side cover-sided mounting surface 32a faces into the width direction W. In the Figures, the side cover-sided mounting surface 32a of the side cover part 20a faces towards the right.

The ventilation module 16a comprises a counter-mounting surface 38a. The counter-mounting surface 38a faces into the width direction W. In the representation of Figures 1 to 3, the counter-mounting surface 38a faces to the left.

The counter-mounting surface 38a comprises a counter-connection feature 40a and a counter-positioning feature 42a.

In an assembled state of the dashboard assembly 10, the ventilation module 16a, more precisely the counter-mounting surface 38a, abuts against the side cover-sided mounting surface 32a of the side cover part 20a.

Moreover, the ventilation module 16a and the side cover part 20a are mechanically connected via the side cover-sided connection feature 34a and the counter-connection feature 40a. More precisely, the side cover-sided connection feature 34a and the counter-connection feature 40a engage each other.

In the example shown in the Figures, the side cover-sided connection feature 34a is formed as a connection opening and the counter-connection feature 40a is formed as a connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 42a and the side cover-sided positioning feature 36a of the side cover part 20a engage each other.

In the example shown in the Figures, the positioning feature 36a is formed as a positioning opening and the counter-positioning feature 42a is formed as a positioning protrusion. It is understood that this is just an example and any other suitable connection features and suitable counter-connection features could be used.

Consequently, the side cover part 20a and the ventilation module 16a assume a well-defined position relative to one another. Moreover, the side cover part 20a and the ventilation module 16a are connected to one another in a mechanically stable manner.

The ventilation module 16a also comprises a further counter-mounting surface 44a. The counter-mounting surface 44a faces into the width direction W. In the representation of Figures 1 to 3, the counter-mounting surface 44a faces to the right.

The counter-mounting surface 44a comprises a counter-connection feature 46a and a counter-positioning feature 48a.

The counter-mounting surface 38a and the further counter-mounting surface 44a are arranged on opposite sides of the ventilation module 16a.

In an assembled state of the dashboard assembly 10, the ventilation module 16a, more precisely the second counter-mounting surface 44a, abuts against the body-sided mounting surface 26a of the dashboard body 12.

Moreover, the ventilation module 16a and the dashboard body 12 are mechanically connected via the body-sided connection feature 28a and the counter-connection feature 46a. More precisely, the body-sided connection feature 28a and the counter-connection feature 46a engage each other.

In the example shown in the Figures, the body-sided connection feature 28a is formed as a connection opening and the counter-connection feature 46a is formed as a connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 48a and the body-sided positioning feature 30a of the dashboard body 12 engage each other.

In the example shown in the Figures, the positioning feature 30a is formed as a positioning opening and the counter-positioning feature 48a is formed as a positioning protrusion. It is understood that this is just an example and any other suitable connection features and suitable counter-connection features could be used.

Consequently, the dashboard body 12 and the ventilation module 16a assume a well-defined position relative to one another. Moreover, the dashboard body 12 and the ventilation module 16a are connected to one another in a mechanically stable manner.

The ventilation module 16b is sandwiched between the side cover part 20b and the dashboard body 12.

To this end, a body-sided mounting surface 26b with a body-sided connection feature 28b and a body-sided positioning feature 30b are arranged on the dashboard body 12. The body-sided mounting surface 26b faces into the width direction W. In the examples of Figures 1 to 3, the body-sided mounting surface 26b faces to the right.

Moreover, on the side cover part 20b, there is provided a side cover-sided mounting surface 32b having a side cover-sided connection feature 34b and a side cover-sided positioning feature 36b. The side cover-sided mounting surface 32b faces into the width direction W. In the Figures, the side cover-sided mounting surface 32b of the side cover part 20b faces towards the left.

The ventilation module 16b comprises a counter-mounting surface 38b. The counter-mounting surface 38b faces into the width direction W. In the representation of Figures 1 to 3, the counter-mounting surface 38b faces to the right.

The counter-mounting surface 38b comprises a counter-connection feature 40b and a counter-positioning feature 42b.

In an assembled state of the dashboard assembly 10, the ventilation module 16b, more precisely the first counter-mounting surface 38b, abuts against the side cover-sided mounting surface 32b of the side cover part 20b.

Moreover, the ventilation modules 16b and the side cover part 20b are mechanically connected via the side cover-sided connection feature 34b and the counter-connection feature 40b. More precisely, the side cover-sided connection feature 34b and the counter-connection feature 40b engage each other.

In the example shown in the Figures, the side cover-sided connection feature 34b is formed as a connection opening and the counter-connection feature 40b is formed as a connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 42b and the side cover-sided positioning feature 36b of the side cover part 20b engage each other.

In the example shown in the Figures, the positioning feature 36b is formed as a positioning opening and the counter-positioning feature 42b is formed as a positioning protrusion. It is understood that this is just an example and any other suitable connection features and suitable counter-connection features could be used.

Consequently, the side cover part 20b and the ventilation module 16b assume a well-defined position relative to one another. Moreover, the side cover part 20b and the ventilation module 16b are connected to one another in a mechanically stable manner.

The ventilation module 16b also comprises a further counter-mounting surface 44b. The counter-mounting surface 44b faces into the width direction W. In the representation of Figures 1 to 3, the counter-mounting surface 44b faces to the left.

The counter-mounting surface 44b comprises a counter-connection feature 46b and a counter-positioning feature 48b.

The counter-mounting surface 38b and the further counter-mounting surface 44b are arranged on opposite sides of the ventilation module 16b.

In an assembled state of the dashboard assembly 10, the ventilation module 16b, more precisely the second counter-mounting surface 44b, abuts against the body-sided mounting surface 26b of the dashboard body 12.

Moreover, the ventilation module 16b and the dashboard body 12 are mechanically connected via the body-sided connection feature 28b and the counter-connection feature 46b. More precisely, the body-sided connection feature 28b and the counter-connection feature 46b engage each other.

In the example shown in the Figures, the body-sided connection feature 28b is formed as a connection opening and the counter-connection feature 46b is formed as a connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 48b and the body-sided positioning feature 30b of the dashboard body 12 engage each other.

In the example shown in the Figures, the positioning feature 30b is formed as a positioning opening and the counter-positioning feature 48b is formed as a positioning protrusion. It is understood that this is just an example and any other suitable connection features and suitable counter-connection features could be used.

Consequently, the dashboard body 12 and the ventilation module 16b assume a well-defined position relative to one another. Moreover, the dashboard body 12 and the ventilation module 16b are connected to one another in a mechanically stable manner.

The ventilation module 16c is sandwiched between the dashboard body 12 and the central cover part 22.

To this end, a body-sided mounting surface 26c with a body-sided connection feature 28c and a body-sided positioning feature 30c are arranged on the dashboard body 12. The body-sided mounting surface 26c faces into the width direction W. In the examples of Figures 1 to 3, the body-sided mounting surface 26c faces to the right.

Moreover, on the central cover part 22, there is provided a central cover-sided mounting surface 50a having a central cover-sided connection feature 52a and a central cover-sided positioning feature 54a. The central cover-sided mounting surface 50a faces into the width direction W. In the Figures, the central cover-sided mounting surface 50a of the central cover part 22 faces towards the left.

The ventilation module 16c comprises a counter-mounting surface 38c. The counter-mounting surface 38c faces into the width direction W. In the representation of figures 1 to 3, the counter-mounting surface 38c faces to the left.

The counter-mounting surface 38c comprises a counter-connection feature 40c and a counter-positioning feature 42c.

In an assembled state of the dashboard assembly 10, the ventilation module 16c, more precisely the counter-mounting surface 38c, abuts against the body-sided mounting surface 26c of the dashboard body 12.

Moreover, the ventilation module 16c and the dashboard body 12 are mechanically connected via the body-sided connection feature 28c and the counter-connection feature 40c. More precisely, the body-sided connection feature 28c and the counter-connection feature 40c engage each other.

In the example shown in the Figures, the body-sided connection feature 28c is formed as a connection opening and the counter-connection feature 40c is formed as an elastic connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 42c and the body-sided positioning feature 30c of the dashboard body 12 engage each other.

In the example shown in the Figures, the positioning feature 30c is formed as a positioning opening and the counter-positioning feature 42c is formed as a positioning protrusion. It is understood that this is just an example and any other suitable connection features and suitable counter-connection features could be used.

Consequently, the dashboard body 12 and the ventilation module 16c assume a well-defined position relative to one another. Moreover, the dashboard body 12 and the ventilation module 16c are connected to one another in a mechanically stable manner.

The ventilation module 16c also comprises a further counter-mounting surface 44c. The counter-mounting surface 44c faces into the width direction W. In the representation of Figures 1 to 3, the counter-mounting surface 44c faces to the right.

The counter-mounting surface 44c comprises a counter-connection feature 46c and a counter-positioning feature 48c.

The counter-mounting surface 38c and the further counter-mounting surface 44c are arranged on opposite sides of the ventilation module 16c.

In an assembled state of the dashboard assembly 10, the ventilation module 16c, more precisely the second counter-mounting surface 44c, abuts against the central cover-sided mounting surface 50a of the central cover part 22.

Moreover, the ventilation modules 16c and the central cover part 22 are mechanically connected via the central cover-sided connection feature 52a and the counter-connection feature 46c. More precisely, the central cover-sided connection feature 52a and the counter-connection feature 46c engage each other.

In the example shown in the Figures, the central cover-sided connection feature 52a is formed as a connection opening and the counter-connection feature 46c is formed as an elastic connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 48c and the central cover-sided positioning feature 54a of the cover part 22 engage each other.

In the example shown in the Figures, the positioning feature 54a is formed as a positioning opening and the counter-positioning feature 48c is formed as a positioning protrusion. It is understood that this is just an example and any other suitable connection features and suitable counter-connection features could be used.

Consequently, the central cover part 22 and the ventilation module 16c assume a well-defined position relative to one another. Moreover, the central cover part 22 and the ventilation module 16c are connected to one another in a mechanically stable manner.

The ventilation module 16d is sandwiched between the dashboard body 12 and the central cover part 22.

To this end, a body-sided mounting surface 26d with a body-sided connection feature 28d and a body-sided positioning feature 30d are arranged on the dashboard body 12. The body-sided mounting surface 26d faces into the width direction W. In the examples of Figures 1 to 3, the body-sided mounting surface 26d faces to the left.

Moreover, on the central cover part 22, there is provided a central cover-sided mounting surface 50b having a central cover-sided connection feature 52b and a central cover-sided positioning feature 54b. The central cover-sided mounting surface 50b faces into the width direction W. In the figures, the central cover-sided mounting surface 50b of the central cover part 22 faces towards the right.

The ventilation module 16d comprises a counter-mounting surface 38d. The counter-mounting surface 38d faces into the width direction W. In the representation of Figures 1 to 3, the counter-mounting surface 38d faces to the right.

The counter-mounting surface 38d comprises a counter-connection feature 40d and a counter-positioning feature 42d.

In an assembled state of the dashboard assembly 10, the ventilation module 16d, more precisely the counter-mounting surface 38d, abuts against the body-sided mounting surface 26d of the dashboard body 12.

Moreover, the ventilation modules 16d and the dashboard body 12 are mechanically connected via the body-sided connection feature 28d and the counter-connection feature 40d. More precisely, the body-sided connection feature 28d and the counter-connection feature 40d engage each other.

In the example shown in the Figures, the body-sided connection feature 28d is formed as a connection opening and the counter-connection feature 40d is formed as an elastic connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 42d and the body-sided positioning feature 30d of the dashboard body 12 engage each other.

In the example shown in the Figures, the positioning feature 30d is formed as a positioning opening and the counter-positioning feature 42d is formed as a positioning protrusion. It is understood that this is just an example and any other suitable connection features and suitable counter-connection features could be used.

Consequently, the dashboard body 12 and the ventilation module 16d assume a well-defined position relative to one another. Moreover, the dashboard body 12 and the ventilation module 16d are connected to one another in a mechanically stable manner.

The ventilation module 16d also comprises a further counter-mounting surface 44d. The counter-mounting surface 44d faces into the width direction W. In the representation of Figures 1 to 3, the counter-mounting surface 44d faces to the left.

The counter-mounting surface 44d comprises a counter-connection feature 46d and a counter-positioning feature 48d.

The counter-mounting surface 38d and the further counter-mounting surface 44d are arranged on opposite sides of the ventilation module 16d.

In an assembled state of the dashboard assembly 10, the ventilation module 16d, more precisely the second counter-mounting surface 44d, abuts against the central cover-sided mounting surface 50b of the central cover part 22.

Moreover, the ventilation modules 16d and the central cover part 22 are mechanically connected via the central cover-sided connection feature 52b and the counter-connection feature 46d. More precisely, the central cover-sided connection feature 52b and the counter-connection feature 46d engage each other.

In the example shown in the Figures, the central cover-sided connection feature 52b is formed as a connection opening and the counter-connection feature 46d is formed as an elastic connection hook. The connection hook is configured to engage the connection opening. Of course, kinematically inverting the connection opening and the connection hook is also possible. It is understood that this is just an example and any other suitable connection features and suitable counter-connection features could be used, e.g. a threaded bolt and a corresponding nut, a gluing surface with glue and a counter-gluing surface or a welding zone and a counter-welding zone.

Furthermore, the counter-positioning feature 48d and the central cover-sided positioning feature 54b of the cover part 22 engage each other.

In the example shown in the Figures, the positioning feature 54b is formed as a positioning opening and the counter-positioning feature 48d is formed as a positioning protrusion. It is understood that this is just an example and any other suitable connection features and suitable counter-connection features could be used.

Consequently, the central cover part 22 and the ventilation module 16d assume a well-defined position relative to one another. Moreover, the central cover part 22 and the ventilation module 16d are connected to one another in a mechanically stable manner.

Beyond that, side cover part 20a comprises a bezel portion 56a and side cover part 20b comprises a bezel portion 56b. In a mounted state of the dashboard assembly, the bezel portions 56a, 56b are located adjacent to the ventilation modules 16a, 16b (cf. Figures 1 and 2).

Moreover, the dashboard body 12 comprises bezel portions 58a, 58b. Also these bezel portions 58a, 58b are located adjacent to the ventilation modules 16a, 16b respectively, if the dashboard assembly 10 is mounted.

Consequently, ventilation module 16a, especially air outlet 18a is framed by the bezel portions 56a, 58a. In the same manner, ventilation module 16b, especially air outlet 18b is framed by the bezel portions 56b, 58b.

Additionally, the dashboard body 12 comprises bezel portions 58c, 58d these bezel portions 58c, 58d are located adjacent to the ventilation modules 16c, 16d respectively if the dashboard assembly 10 is mounted.

Furthermore, the central cover part 22 comprises bezel portions 60a, 60b. In a mounted state of the dashboard assembly 10, the bezel portion 60a, 60b are located adjacent to the ventilation modules 16c, 16d respectively.

Consequently, ventilation module 16c, especially air outlet 18c is framed by the bezel portions 58c, 60a. In the same manner, ventilation module 16d, especially air outlet 18d, is framed by the bezel portions 58d, 60b.

The dashboard assembly 10 as shown in Figures 1 to 3 may be assembled using a method for assembling a dashboard assembly for a vehicle.

In this context, the ventilation module 16a is mounted as follows.

In a first step, the ventilation module 16a is abutted against the side cover-sided mounting surface 32a of the side cover part 20a. In doing so, the ventilation modules 16a and the side cover part 20a are moved relative to one another along the width direction W. Moreover, the ventilation module 16a is positioned and connected to the side cover-sided mounting surface 32a of the side cover part 20a has as has been explained above.

Subsequently, the sub-assembly comprising the side cover part 20a and the ventilation module 16a are mounted on the dashboard body 12. To this end, the ventilation module 16a is abutted against the body-sided mounting surface of the dashboard body 12. In doing so, the sub-assembly and the dashboard body 12 are moved relative to one another along the width direction W. Additionally, the ventilation module 16a is positioned and connected to the body-sided mounting surface 26a of the dashboard body 12 as has been explained above.

The ventilation module 16b is mounted in a similar manner.

In a first step, the ventilation module 16b is abutted against the side cover-sided mounting surface 32b of the side cover part 20b. In doing so, the ventilation module 16b and the side cover part 20b are moved relative to one another along the width direction W. Moreover, the ventilation module 16b is positioned and connected to the side cover-sided mounting surface 32b of the side cover part 20b has as has been explained above.

Subsequently, the sub-assembly comprising the side cover part 20b and the ventilation module 16b are mounted on the dashboard body 12. To this end, the ventilation module 16b is abutted against the body-sided mounting surface 26b of the dashboard body 12. In doing so, the sub-assembly and the dashboard body 12 are moved relative to one another along the width direction W. Additionally, the ventilation module 16b is positioned and connected to the body-sided mounting surface 26b of the dashboard body 12 as has been explained above.

It is noted that it is of course also possible that at least one of the ventilation modules 16a, 16b is first abutted and connected to the dashboard body 12 and then, the side cover part 20a and/or the side cover part 20b are abutted and connected to the respective ventilation module 16a, 16b. Also in this alternative, the main direction of assembly is oriented along with direction W.

Moreover, when executing the method, ventilation modules 16c, 16d are mounted as follows.

In a first step, ventilation module 16c is abutted against the body-sided mounting surface 26c of the dashboard body 12. In doing so, the ventilation module 16c and the dashboard body 12 are moved relative to one another along the width direction W. Moreover, the ventilation module 16c is positioned and connected to the dashboard body 12 as has been explained above.

Additionally, ventilation module 16d is abutted against the body-sided mounting surface 26d of the dashboard body 12. In doing so, the ventilation module 16d and the dashboard body 12 are moved relative to one another along the width direction W. Moreover, the ventilation module 16d is positioned and connected to the dashboard body 12 as has been explained above.

Thereafter, the central cover part 22 is arranged between the ventilation module 16c and the ventilation module 16d. To this end, the central cover part 22 is moved into the space between the ventilation module 16c and the ventilation module 16d along the height direction H. At the same time, the ventilation module 16c and the ventilation module 16d are positioned relatively to the central cover part 22 and connected to the central cover part 22 as has been explained above.

In a last step, the screen unit 24 is mounted on the central cover part 22. To this end, the screen unit 24 is moved towards the central cover part 22 essentially along the depth direction D. Thus, the screen unit 24 is used to seal a central portion of the central cover part 22.

Other variations to the disclosed examples can be understood and effected by those skilled in the art in practicing the claimed invention from the study of the drawings, the description, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: dashboard assembly
- 12: dashboard body
- 14: reception channel
- 16a: ventilation module
- 16b: ventilation module
- 16c: ventilation module
- 16d: ventilation module
- 18a: air outlet
- 18b: air outlet
- 18c: air outlet
- 18d: air outlet
- 20a: side cover part
- 20b: side cover part
- 22: central cover part
- 24: screen unit
- 26a: body-sided mounting surface
- 26b: body-sided mounting surface
- 26c: body-sided mounting surface
- 26d: body-sided mounting surface
- 28a: body-sided connection feature
- 28b: body-sided connection feature
- 28c: body-sided connection feature
- 28d: body-sided connection feature
- 30a: body-sided positioning feature
- 30b: body-sided positioning feature
- 30c: body-sided positioning feature
- 30d: body-sided positioning feature
- 32a: side cover-sided mounting surface
- 32b: side cover-sided mounting surface
- 34a: side cover-sided connection feature
- 34b: side cover-sided connection feature
- 36a: side cover-sided positioning feature
- 36b: side cover-sided positioning feature
- 38a: counter-mounting surface
- 38b: counter-mounting surface
- 38c: counter-mounting surface
- 38d: counter-mounting surface
- 40a: counter-connection feature
- 40b: counter-connection feature
- 40c: counter-connection feature
- 40d: counter-connection feature
- 42a: counter-positioning feature
- 42b: counter-positioning feature
- 42c: counter-positioning feature
- 42d: counter-positioning feature
- 44a: counter-mounting surface
- 44b: counter-mounting surface
- 44c: counter-mounting surface
- 44d: counter-mounting surface
- 46a: counter-connection feature
- 46b: counter-connection feature
- 46c: counter-connection feature
- 46d: counter-connection feature
- 48a: counter-positioning feature
- 48b: counter-positioning feature
- 48c: counter-positioning feature
- 48d: counter-positioning feature
- 50a: central cover-sided mounting surface
- 50b: central cover-sided mounting surface
- 52a: central cover-sided connection feature
- 52b: central cover-sided connection feature
- 54a: central cover-sided positioning feature
- 54b: central cover-sided positioning feature
- 56a: bezel portion
- 56b: bezel portion
- 58a: bezel portion
- 58b: bezel portion
- 58c: bezel portion
- 58d: bezel portion
- 60a: bezel portion
- 60b: bezel portion

- W: width direction
- H: height direction
- D: depth direction

## Claims

1. A dashboard assembly (10) for a vehicle, comprising
a dashboard body (12) extending at least along a width direction (W), wherein in a state in which the dashboard body (12) is mounted in the vehicle, the width direction (W) extends in parallel to a width direction of the vehicle, and
at least one ventilation module (16a, 16b, 16c, 16d), comprising an air duct ending in an air outlet (18a, 18b, 18c, 18d) being configured to discharge air into a passenger compartment of the vehicle,
wherein at least one body-sided mounting surface (26a, 26b, 26c, 26d) with a body-sided connection feature (28a, 28b, 28c, 28d) is arranged on the dashboard body (12), the body-sided mounting surface (26a, 26b, 26c, 26d) facing into the width direction (W), and
wherein the at least one ventilation module (16a, 16b, 16c, 16d) abuts against the body-sided mounting surface (26a, 26b, 26c, 26d) and is connected to the dashboard body (12) using the body-sided connection feature (28a, 28b, 28c, 28d),
**characterized by**
- a side cover part (20a, 20b) being arranged at an end of the dashboard body (12) when regarding the width direction (W), wherein at least one side cover-sided mounting surface (32a, 32b) with a side cover-sided connection feature (34a, 34b) is arranged on the side cover part (20a, 20b), the side cover-sided mounting surface (32a, 32b) facing into the width direction (W), and wherein the at least one ventilation module (16a, 16b) abuts against the side cover-sided mounting surface (32a, 32b) and is connected to the side cover part (20a, 20b) using the side cover-sided connection feature (34a, 34b), and/or
- a central cover part (22) being arranged between the ends of the dashboard body (12) when regarding the width direction (W), wherein at least one central cover-sided mounting surface (50a, 50b) with a central cover-sided connection feature (52a, 52b) is arranged on the central cover part (22), the central cover-sided mounting surface (50a, 50b) facing into the width direction (W), and wherein the at least one ventilation module (16c, 16d) abuts against the central cover-sided mounting surface (50a, 50b) and is connected to the central cover part (22) using the central cover-sided connection feature (52a, 52b).

2. The dashboard assembly (10) of claim 1, wherein the body-sided mounting surface (26a, 26b, 26c, 26d) comprises a body-sided positioning feature (30a, 30b, 30c, 30d) and wherein the ventilation module (16a, 16b, 16c, 16d) engages the body-sided positioning feature (30a, 30b, 30c, 30d).

3. The dashboard assembly (10) of any one of the preceding claims, wherein the dashboard body (12) comprises a bezel portion (58a, 58b, 58c, 58d) being located adjacent to the ventilation module (16a, 16b, 16c, 16d).

4. The dashboard assembly (10) of any one of the preceding claims, wherein the side cover-sided mounting surface (32a, 32b) comprises a side cover-sided positioning feature (36a, 36b) and wherein the ventilation module (16a, 16b) engages the side cover-sided positioning feature (36a, 36b).

5. The dashboard assembly (10) of any one of the preceding claims, wherein the side cover part (20a, 20b) comprises a bezel portion (56a, 56b) being located adjacent to the ventilation module (16a, 16b).

6. The dashboard assembly (10) of any one of the preceding claims, wherein the central cover-sided mounting surface (50a, 50b) comprises a central cover-sided positioning feature (54a, 54b) and wherein the ventilation module (16c, 16d) engages the central cover-sided positioning feature (54a, 54b).

7. The dashboard assembly (10) of any one of the preceding claims, wherein the central cover part (22) comprises a bezel portion (60a, 60b) being located adjacent to the ventilation module (16c, 16d).

8. A ventilation module (16a, 16b, 16c, 16d) for a dashboard assembly (10) of any one of the preceding claims, comprising an air duct ending in an air outlet (18a, 18b, 18c, 18d) being configured to discharge air into a passenger compartment of the vehicle, and at least one counter-mounting surface (38a, 38b, 38c, 38d, 44a, 44b, 44c, 44d) with a counter-connection feature (40a, 40b, 40c, 40d, 46a, 46b, 46c, 46d), the counter-mounting surface (38a, 38b, 38c, 38d, 44a, 44b, 44c, 44d) being configured to abut against a mounting surface (26a, 26b, 26c, 26d, 32a, 32b, 50a, 50b) of a dashboard body (12), of a side cover part (20a, 20b) or of a central cover part (22) and the counter-connection feature (40a, 40b, 40c, 40d, 46a, 46b,46c, 46d) being configured to engage a connection feature (28a, 28b, 28c, 28d, 34a, 34b, 52a, 52b) of the mounting surface (26a, 26b, 26c, 26d, 32a, 32b, 50a, 50b) of the dashboard body (12), of the side cover part (20a, 20b) or of the central cover part (22).

9. The ventilation module (16a, 16b, 16c, 16d) of claim 8, wherein the ventilation module (16a, 16b, 16c, 16d) comprises two counter-mounting surfaces (38a, 38b, 38c, 38d, 44a, 44b, 44c, 44d), each having a counter-connection feature (40a, 40b, 40c, 40d, 46a, 46b, 46c, 46d), the counter-mounting surfaces (38a, 38b, 38c, 38d, 44a, 44b, 44c, 44d) being arranged on opposite sides of the ventilation module (16a, 16b, 16c, 16d).

10. A side cover part (20a, 20b) for a dashboard assembly (10) of any one of claims 1 to 7, having at least one side cover-sided mounting surface (32a, 32b) with a side cover-sided connection feature (34a, 34b), the side cover-sided mounting surface (32a, 32b) facing into a width direction (W) when the side cover part (20a, 20b) is in use.

11. A central cover part (22) for a dashboard assembly (10) of any one of claims 1 to 7, having at least one central cover-sided mounting surface (50a, 50b) with a central cover-sided connection feature (52a, 52b), the central cover-sided mounting surface (50a, 50b) facing into a width direction (W) when the central cover part (22) is in use.

12. A method for assembling a dashboard assembly (10) for a vehicle according to claim 1, comprising
- abutting a ventilation module (16a, 16b, 16c, 16d) against a body-sided mounting surface (26a, 26b, 26c, 26d) of a dashboard body (12) or a side cover-sided mounting surface (32a, 32b) of a side cover part (20a, 20b) by moving the ventilation module (16a, 16b, 16c, 16d) and the dashboard body (12) or side cover part (20a, 20b) relative to one another along a width direction (W), and
- connecting the ventilation module (16a, 16b, 16c, 16d) to the body-sided mounting surface (26a, 26b, 26c, 26d) of the dashboard body (12) or to the side cover-sided mounting surface (32a, 32b) of the side cover part (20a, 20b) using a connection feature (28a, 28b, 28c, 28d, 34a, 34b).

## Patentansprüche

1. Armaturenbrettanordnung (10) für ein Fahrzeug, umfassend:
einen Armaturenbrettkörper (12), der sich mindestens entlang einer Breitenrichtung (W) erstreckt, wobei in einem Zustand, in dem der Armaturenbrettkörper (12) in dem Fahrzeug montiert ist, die Breitenrichtung (W) parallel zu einer Breitenrichtung des Fahrzeugs verläuft, und
mindestens ein Belüftungsmodul (16a, 16b, 16c, 16d), das einen Luftkanal umfasst, der in einem Luftauslass (18a, 18b, 18c, 18d) endet, der dazu eingerichtet ist, Luft in einen Fahrgastraum des Fahrzeugs auszulassen,
wobei mindestens eine körperseitige Montagefläche (26a, 26b, 26c, 26d) mit einem körperseitigen Verbindungselement (28a, 28b, 28c, 28d) an dem Armaturenbrettkörper (12) angeordnet ist, wobei die körperseitige Montagefläche (26a, 26b, 26c, 26d) in die Breitenrichtung (W) weist, und
wobei das mindestens eine Belüftungsmodul (16a, 16b, 16c, 16d) an der körperseitigen Montagefläche (26a, 26b, 26c, 26d) anliegt und mit dem Armaturenbrettkörper (12) unter Verwendung des körperseitigen Verbindungselements (28a, 28b, 28c, 28d) mit dem Armaturenbrettkörper (12) verbunden ist,
**gekennzeichnet durch**:
- einen seitlichen Abdeckungsteil (20a, 20b), der an einem Ende des Armaturenbrettkörper (12) in Bezug auf die Breitenrichtung (W) angeordnet ist, wobei mindestens eine seitenabdeckungsseitige Montagefläche (32a, 32b) mit einem seitenabdeckungsseitigen Verbindungselement (34a, 34b) an dem seitlichen Abdeckungsteil (20a, 20b) angeordnet ist, wobei die seitenabdeckungsseitige Montagefläche (32a, 32b) in die Breitenrichtung (W) weist, und wobei das mindestens eine Belüftungsmodul (16a, 16b) an der seitenabdeckungsseitigen Montagefläche (32a, 32b) anliegt und mit dem seitlichen Abdeckungsteil (20a, 20b) unter Verwendung des seitenabdeckungsseitigen Verbindungselements (34a, 34b) verbunden ist, und/oder
- einen mittigen Abdeckungsteil (22), der zwischen den Enden des Armaturenbrettkörper (12) in Bezug auf die Breitenrichtung (W) angeordnet ist, wobei mindestens eine mittenabdeckungsseitige Montagefläche (50a, 50b) mit einem mittenabdeckungsseitigen Verbindungselement (52a, 52b) an dem mittigen Abdeckungsteil (22) angeordnet ist, wobei die mittenabdeckungsseitige Montagefläche (50a, 50b) in die Breitenrichtung (W) weist, und wobei das mindestens eine Belüftungsmodul (16c, 16d) an der mittenabdeckungsseitigen Montagefläche (50a, 50b) anliegt und mit dem mittigen Abdeckungsteil (22) unter Verwendung des mittenabdeckungsseitigen Verbindungselements (52a, 52b) verbunden ist.

2. Armaturenbrettanordnung (10) nach Anspruch 1, wobei die körperseitige Montagefläche (26a, 26b, 26c, 26d) ein körperseitiges Positionierungselement (30a, 30b, 30c, 30d) umfasst, und wobei das Belüftungsmodul (16a, 16b, 16c, 16d) das körperseitige Positionierungselement (30a, 30b, 30c, 30d) in Eingriff nimmt.

3. Armaturenbrettanordnung (10) nach einem der vorangehenden Ansprüche, wobei der Armaturenbrettkörper (12) einen Einfassungsabschnitt (58a, 58b, 58c, 58d) umfasst, der sich benachbart zu dem Belüftungsmodul (16a, 16b, 16c, 16d) befindet.

4. Armaturenbrettanordnung (10) nach einem der vorangehenden Ansprüche, wobei die seitenabdeckungsseitige Montagefläche (32a, 32b) ein seitenabdeckungsseitiges Positionierungselement (36a, 36b) umfasst, und wobei das Belüftungsmodul (16a, 16b) das seitenabdeckungsseitige Positionierungselement (36a, 36b) in Eingriff nimmt.

5. Armaturenbrettanordnung (10) nach einem der vorangehenden Ansprüche, wobei der seitliche Abdeckungsteil (20a, 20b) einen Einfassungsabschnitt (56a, 56b) umfasst, der sich benachbart zu dem Belüftungsmodul (16a, 16b) befindet.

6. Armaturenbrettanordnung (10) nach einem der vorangehenden Ansprüche, wobei die mittenabdeckungsseitige Montagefläche (50a, 50b) ein mittenabdeckungsseitiges Positionierungselement (54a, 54b) umfasst, und wobei das Belüftungsmodul (16c, 16d) das mittenabdeckungsseitige Positionierungselement (54a, 54b) in Eingriff nimmt.

7. Armaturenbrettanordnung (10) nach einem der vorangehenden Ansprüche, wobei der mittige Abdeckungsteil (22) einen Einfassungsabschnitt (60a, 60b) umfasst, der sich benachbart zu dem Belüftungsmodul (16c, 16d) befindet.

8. Belüftungsmodul (16a, 16b, 16c, 16d) für eine Armaturenbrettanordnung (10) nach einem der vorangehenden Ansprüche, umfassend einen Luftkanal, der in einem Luftauslass (18a, 18b, 18c, 18d) endet, der dazu eingerichtet ist, Luft in einen Fahrgastraum des Fahrzeugs auszulassen, und mindestens eine Gegenmontagefläche (38a, 38b, 38c, 38d, 44a, 44b, 44c, 44d) mit einem Gegenverbindungselement (40a, 40b, 40c, 40d, 46a, 46b, 46c, 46d), wobei die Gegenmontagefläche (38a, 38b, 38c, 38d, 44a, 44b, 44c, 44d) dazu eingerichtet ist, an einer Montagefläche (26a, 26b, 26c, 26d, 32a, 32b, 50a, 50b) eines Armaturenbrettkörper (12), eines seitlichen Abdeckungsteils (20a, 20b) oder eines mittigen Abdeckungsteils (22) anzuliegen, und wobei das Gegenverbindungselement (40a, 40b, 40c, 40d, 46a, 46b, 46c, 46d) dazu eingerichtet ist, ein Verbindungselement (28a, 28b, 28c, 28d, 34a, 34b, 52a, 52b) der Montagefläche (26a, 26b, 26c, 26d, 32a, 32b, 50a, 50b) des Armaturenbrettkörper (12), des seitlichen Abdeckungsteils (20a, 20b) oder des mittigen Abdeckungsteils (22) in Eingriff zu nehmen.

9. Belüftungsmodul (16a, 16b, 16c, 16d) nach Anspruch 8, wobei das Belüftungsmodul (16a, 16b, 16c, 16d) zwei Gegenmontageflächen (38a, 38b, 38c, 38d, 44a, 44b, 44c, 44d) umfasst, die jeweils ein Gegenverbindungselement (40a, 40b, 40c, 40d, 46a, 46b, 46c, 46d) aufweisen, wobei die Gegenmontageflächen (38a, 38b, 38c, 38d, 44a, 44b, 44c, 44d) auf gegenüberliegenden Seiten des Belüftungsmoduls (16a, 16b, 16c, 16d) angeordnet sind.

10. Seitlicher Abdeckungsteil (20a, 20b) für eine Armaturenbrettanordnung (10) nach einem der Ansprüche 1 bis 7, aufweisend mindestens eine seitenabdeckungsseitige Montagefläche (32a, 32b) mit einem seitenabdeckungsseitigen Verbindungselement (34a, 34b), wobei die seitenabdeckungsseitige Montagefläche (32a, 32b) in die Breitenrichtung (W) weist, wenn der seitliche Abdeckungsteil (20a, 20b) in Gebrauch ist.

11. Mittiger Abdeckungsteil (22) für eine Armaturenbrettanordnung (10) nach einem der Ansprüche 1 bis 7, aufweisend mindestens eine mittenabdeckungsseitige Montagefläche (50a, 50b) mit einem mittenabdeckungsseitigen Verbindungselement (52a, 52b), wobei die mittenabdeckungsseitige Montagefläche (50a, 50b) in die Breitenrichtung (W) weist, wenn der seitliche Abdeckungsteil (22) in Gebrauch ist.

12. Verfahren für das Zusammenbauen einer Armaturenbrettanordnung (10) für ein Fahrzeug nach Anspruch 1, umfassend:
- Anlegen eines Belüftungsmoduls (16a, 16b, 16c, 16d) an eine körperseitige Montagefläche (26a, 26b, 26c, 26d) eines Armaturenbrettkörper (12) oder einer seitenabdeckungsseitigen Montagefläche (32a, 32b) eines seitlichen Abdeckungsteils (20a, 20b) durch Bewegen des Belüftungsmoduls (16a, 16b, 16c, 16d) und des Armaturenbrettkörper (12) oder des seitlichen Abdeckungsteils (20a, 20b) relativ zueinander entlang einer Breitenrichtung (W), und
- Verbinden des Belüftungsmoduls (16a, 16b, 16c, 16d) mit der körperseitigen Montagefläche (26a, 26b, 26c, 26d) des Armaturenbrettkörper (12) oder mit der seitenabdeckungsseitigen Montagefläche (32a, 32b) des seitlichen Abdeckungsteils (20a, 20b) unter Verwendung eines Verbindungselements (28a, 28b, 28c, 28d, 34a, 34b).

## Revendications

1. Ensemble de planche de bord (10) pour un véhicule, comprenant :
un corps de planche de bord (12) s'étendant au moins le long d'une direction de largeur (W), dans lequel, dans un état dans lequel le corps de planche de bord (12) est monté dans le véhicule, la direction de largeur (W) s'étend parallèlement à une direction de largeur du véhicule, et
au moins un module de ventilation (16a, 16b, 16c, 16d), comprenant un conduit d'air se terminant dans une sortie d'air (18a, 18b, 18c, 18d) étant configuré pour évacuer de l'air dans un habitacle de passagers du véhicule,
dans lequel au moins une surface de montage côté corps (26a, 26b, 26c, 26d) avec un élément de liaison côté corps (28a, 28b, 28c, 28d) est agencée sur le corps de planche de bord (12), la surface de montage côté corps (26a, 26b, 26c, 26d) étant dirigée dans la direction de largeur (W), et
dans lequel ledit au moins un module de ventilation (16a, 16b, 16c, 16d) est en butée contre la surface de montage côté corps (26a, 26b, 26c, 26d) et est relié au corps de planche de bord (12) à l'aide de l'élément de liaison côté corps (28a, 28b, 28c, 28d),
**caractérisé par**
- une partie de couvercle latéral (20a, 20b) étant agencée à une extrémité du corps de planche de bord (12) en regardant dans la direction de largeur (W), dans lequel au moins une surface de montage côté couvercle latéral (32a, 32b) avec un élément de liaison côté couvercle latéral (34a, 34b) est agencée sur la partie de couvercle latéral (20a, 20b), la surface de montage côté couvercle latéral (32a, 32b) étant dirigée dans la direction de largeur (W), et dans lequel ledit au moins un module de ventilation (16a, 16b) est en butée contre la surface de montage côté couvercle latéral (32a, 32b) et est relié à la partie de couvercle latéral (20a, 20b) à l'aide de l'élément de liaison côté couvercle latéral (34a, 34b), et/ou
- une partie de couvercle central (22) étant agencée entre les extrémités du corps de planche de bord (12) en regardant dans la direction de largeur (W), dans lequel au moins une surface de montage côté couvercle central (50a, 50b) avec un élément de liaison côté couvercle central (52a, 52b) est agencée sur la partie de couvercle central (22), la surface de montage côté couvercle central (50a, 50b) étant dirigée dans la direction de largeur (W), et dans lequel ledit au moins un module de ventilation (16c, 16d) est en butée contre la surface de montage côté couvercle central (50a, 50b) et est relié à la partie de couvercle central (22) à l'aide de l'élément de liaison côté couvercle central (52a, 52b).

2. Ensemble de planche de bord (10) selon la revendication 1, dans lequel la surface de montage côté corps (26a, 26b, 26c, 26d) comprend un élément de positionnement côté corps (30a, 30b, 30c, 30d) et dans lequel le module de ventilation (16a, 16b, 16c, 16d) est en prise avec l'élément de positionnement côté corps (30a, 30b, 30c, 30d).

3. Ensemble de planche de bord (10) selon l'une quelconque des revendications précédentes, dans lequel le corps de planche de bord (12) comprend une portion d'encadrement (58a, 58b, 58c, 58d) étant située de manière adjacente au module de ventilation (16a, 16b, 16c, 16d).

4. Ensemble de planche de bord (10) selon l'une quelconque des revendications précédentes, dans lequel la surface de montage côté couvercle latéral (32a, 32b) comprend un élément de positionnement côté couvercle latéral (36a, 36b) et dans lequel le module de ventilation (16a, 16b) est en prise avec l'élément de positionnement côté couvercle latéral (36a, 36b).

5. Ensemble de planche de bord (10) selon l'une quelconque des revendications précédentes, dans lequel la partie de couvercle latéral (20a, 20b) comprend une portion d'encadrement (56a, 56b) étant située de manière adjacente au module de ventilation (16a, 16b).

6. Ensemble de planche de bord (10) selon l'une quelconque des revendications précédentes, dans lequel la surface de montage côté couvercle central (50a, 50b) comprend un élément de positionnement côté couvercle central (54a, 54b) et dans lequel le module de ventilation (16c, 16d) est en prise avec l'élément de positionnement côté couvercle central (54a, 54b).

7. Ensemble de planche de bord (10) selon l'une quelconque des revendications précédentes, dans lequel la partie de couvercle central (22) comprend une portion d'encadrement (60a, 60b) étant située de manière adjacente au module de ventilation (16c, 16d).

8. Module de ventilation (16a, 16b, 16c, 16d) pour un ensemble de planche de bord (10) selon l'une quelconque des revendications précédentes, comprenant un conduit d'air se terminant dans une sortie d'air (18a, 18b, 18c, 18d) étant configuré pour évacuer de l'air dans un habitacle de passagers du véhicule, et au moins une surface de montage complémentaire (38a, 38b, 38c, 38d, 44a, 44b, 44c, 44d) avec un élément de montage complémentaire (40a, 40b, 40c, 40d, 46a, 46b, 46c, 46d), la surface de montage complémentaire (38a, 38b, 38c, 38d, 44a, 44b, 44c, 44d) étant configurée pour être en butée contre une surface de montage (26a, 26b, 26c, 26d, 32a, 32b, 50a, 50b) d'un corps de planche de bord (12), d'une partie de couvercle latéral (20a, 20b) ou d'une partie de couvercle central (22) et l'élément de liaison complémentaire (40a, 40b, 40c, 40d, 46a, 46b, 46c, 46d) étant configurée pour être en prise avec un élément de liaison (28a, 28b, 28c, 28d, 34a, 34b, 52a, 52b) de la surface de montage (26a, 26b, 26c, 26d, 32a, 32b, 50a, 50b) du corps de planche de bord (12), de la partie de couvercle latéral (20a, 20b) ou de la partie de couvercle central (22).

9. Module de ventilation (16a, 16b, 16c, 16d) selon la revendication 8, dans lequel le module de ventilation (16a, 16b, 16c, 16d) comprend deux surfaces de montage complémentaire (38a, 38b, 38c, 38d, 44a, 44b, 44c, 44d), chacune ayant un élément de liaison complémentaire (40a, 40b, 40c, 40d, 46a, 46b, 46c, 46d), les surfaces de montage complémentaire (38a, 38b, 38c, 38d, 44a, 44b, 44c, 44d) étant agencées sur des côtés opposés du module de ventilation (16a, 16b, 16c, 16d).

10. Partie de couvercle latéral (20a, 20b) pour un ensemble de planche de bord (10) selon l'une quelconque des revendications 1 à 7, ayant au moins une surface de montage côté couvercle latéral (32a, 32b) avec un élément de liaison côté couvercle latéral (34a, 34b), la surface de montage côté couvercle latéral (32a, 32b) étant dirigée dans une direction de largeur (W) lorsque la partie de couvercle latéral (20a, 20b) est utilisée.

11. Partie de couvercle central (22) pour un ensemble de planche de bord (10) selon l'une quelconque des revendications 1 à 7, ayant au moins une surface de montage côté couvercle central (50a, 50b) avec un élément de liaison côté couvercle central (52a, 52b), la surface de montage côté couvercle central (50a, 50b) étant dirigée dans une direction de largeur (W) lorsque la partie de couvercle central (22) est utilisée.

12. Procédé pour assembler un ensemble de planche de bord (10) pour un véhicule selon la revendication 1, comprenant de :
- mettre en butée un module de ventilation (16a, 16b, 16c, 16d) contre une surface de montage côté corps (26a, 26b, 26c, 26d) d'un corps de planche de bord (12) ou une surface de montage côté couvercle latéral (32a, 32b) d'une partie de couvercle latéral (20a, 20b) en déplaçant le module de ventilation (16a, 16b, 16c, 16d) et le corps de planche de bord (12) ou la partie de couvercle latéral (20a, 20b) l'un par rapport à l'autre le long d'une direction de largeur (W), et
- relier le module de ventilation (16a, 16b, 16c, 16d) à la surface de montage côté corps (26a, 26b, 26c, 26d) du corps de planche de bord (12) ou à la surface de montage côté couvercle latéral (32a, 32b) de la partie de couvercle latéral (20a, 20b) à l'aide d'un élément de liaison (28a, 28b, 28c, 28d, 34a, 34b).
